# EUROPEAN PATENT SPECIFICATION

(11) **EP 2 148 521 B1**
(45) Date of publication and mention of the grant of the patent: **12.10.2016**
(21) Application number: 08734248.1
(22) Date of filing: 06.05.2008
(51) Int. Cl.: H04L 29/06, H04W 4/00

(54) **METHOD FOR ACQUIRING AND TRANSMITTING USER LOCATION INFORMATION AND NETWORK DEVICE THEREOF**
VERFAHREN ZUM BESCHAFFEN UND ÜBERTRAGEN VON BENUTZERORTSINFORMATIONEN UND NETZEINRICHTUNG DAFÜR
PROCÉDÉ POUR OBTENIR ET TRANSMETTRE UNE INFORMATION DE POSITION D'UN UTILISATEUR ET SON DISPOSITIF DE RÉSEAU

(30) Priority: 11.05.2007 CN 200710107006
(43) Date of publication of application: 27.01.2010
(73) Proprietor: Huawei Technologies Co., Ltd., Longgang District Shenzhen, Guangdong 518129 (CN)
(72) Inventor: SHU, Xuzu c/o Huawei technologies Co.Ltd, Longgang District 518129 Shenzhen (CN)
(74) Representative: Kreuz, Georg Maria
(86) International application number: PCT/CN2008/070893
(87) International publication number: WO 2008/138252

(56) References cited:
- CN-A- 1 512 797
- CN-A- 1 937 802
- CN-A- 101 052 234
- CN-A- 101 132 603
- "Telecommunications and Internet converged Services and Protocols for Advanced Networking (TISPAN); NGN Security; Security Architecture; ETSI TS 187 003", ETSI STANDARDS, LIS, SOPHIA ANTIPOLIS CEDEX, FRANCE, vol. TISPAN, no. V1.1.1, 1 March 2006 (2006-03-01), XP014034018, ISSN: 0000-0001
- "Telecommunications and Internet Converged Services and Protocols for Advanced Networking (TISPAN) IP Multimedia Call Control Protocol based on Session Initiation Protocol (SIP) and Session Description Protocol (SDP) Stage 3 Protocol specification 3GPP TS. 24.229 (Release 7), modified ;; Draft ETSI E", ETSI STANDARDS, LIS, SOPHIA ANTIPOLIS CEDEX, FRANCE, vol. TISPAN, no. V0.7.13, 1 February 2006 (2006-02-01), XP014033437, ISSN: 0000-0001

## Description

### FIELD OF THE INVENTION

The present invention relates to network communication technologies, and in particular, to a method for obtaining user location information, a method for transmitting user location information, and a network device.

### BACKGROUND

In an IP Multimedia Subsystem (IMS), the Serving Call Session Control Function (S-CSCF), which is a network element for processing routes, is located in the home area of the user, but the user may roam. Therefore, local number routing may occur in the IMS.

Local number routing occurs in this circumstance: When the user dials a telephone number with no country code or area code in the roam area, or dials a telephone number with no mobile access code, the S-CSCF needs to determine the communication destination of the user according to the user location so that the call service can be accomplished correctly as intended by the user.

In the local number routing process, the S-CSCF needs to obtain the user location information. Currently, the S-CSCF obtains the user location information in this way: The User Equipment (UE) provides the user location information. That is, the UE sends the user location information to the network side. For example, the UE adds the user location information into a phone-context parameter or a P-Access-Network-Info (PANI, namely, 3GPP access network information) parameter of a Request Uniform Resource Identifier (URI) of a Session Initiation Protocol (SIP) signaling, and sends the Request URI to the network side.

The inventor finds at least the following defects in the prior art:
Currently, no UE supports the phone-context parameter of the Request URI to carry the user location information. For example, the user terminal does not support the phone-context to carry the user location information in the mcc.mnc.gprs.homedomainname format. Therefore, currently, the S-CSCF is unable to obtain user location information in the way described above.

Even if the UE supports the phone-context parameter of the Request URI to carry user location information, because the Mobile Country Code (MCC) and the Mobile Network Code (MNC) in some countries are unable to specify the area code, the S-CSCF is still unable to know the user location information.

Because the user location information is sent by the UE, the user location information is not trustable. For example, when the user dials a home area telephone number in the roam area, the user may input the home area location information as the location information.

"Telecommunications and Internet converged Services and Protocols for Advanced networking (TISPAN); NGN Security; Security Architecture; ETSI TS 187003" relates the NASS Bundled Authentication. Particularly, it mentions that S-CSCF queries the UPSF over the Cx interface using MAR request, the UPSF returns a message with the location information of the user identified by the IMPI and IMPU.

"Telecommunications and Internet Converged Services and Protocols for Advanced Networking (TISPAN) IP Multimedia Call Control Protocol based on Session Initiation Protocol (SIP) and Session Description Protocol (SDP) Stage 3 Protocol specification 3GPP TS. 24.229 (Release 7), modified; Draft ETSI E" relates to initial registration and user-initiated reregistration for non IMS-AKA authentication. In particular, it mentions that "the S-CSCF received via the Cx interface one or more Line-Identifiers, compare each of the 'dsl-location' parameter of the P-Access-Network-Info header field".

### SUMMARY

The present invention provides a method for obtaining user location information, a method for transmitting user location information, and a network device so that the S-CSCF can obtain accurate and trustable user location information.

A method for obtaining user location information is disclosed in an embodiment of the present invention. The method includes:
receiving, by a S-CSCF, a message from a Home Subscriber Server (HSS), where the message carries a user access network type and user location information of a calling user; and
obtaining the user access network type and the user location information of the calling user from the message;
where the message is a CxDx interface protocol message, and the receiving the message sent by the HSS comprises:
receiving, by the S-CSCF, the CxDx interface protocol message sent by the HSS after the HSS determines that the user access network type and the user location information of the calling user have changed, wherein the CxDx interface protocol message carries the changed user access network type and the user location information.

A method for transmitting user location information is disclosed in an embodiment of the present invention. The method includes:
adding, by the HSS, the user access network type and the user location information into a message if determining that the user access network type and the user location information have changed according to the received user access network type and user location information, and sending the message to the S-CSCF.

A network device is disclosed in an embodiment of the present invention. The network device is an S-CSCF and includes:
a receiving module, adapted to receive a message from the HSS, where the message carries the user access network type and the user location information of a calling user and is extended in view of the user access network type and the user location information of the calling user, where the message is a CxDx interface protocol message, and the CxDx interface protocol message is sent by the HSS after the HSS determines that the user access network type and the user location information of the calling user have changed and is inclusive of the changed user access network type and the user location information; and
an obtaining module, adapted to obtain the user access network type and the user location information of the calling user from the message received by the receiving module.

Another network device is disclosed in an embodiment of the present invention. The network device is an HSS and includes:
a storing module, adapted to store the user access network type and the user location information of a calling user;
a first judging module, adapted to: judge whether the user access network type and the user location information of the calling user have changed according to the information received by the corresponding HSS; and store the changed user access network type and user location information of the calling user into the storing module if determining that the user access network type and the user location information of the calling user have changed, and output a notification; and
a second sending module, adapted to: add the changed user access network type and user location information of the calling user into a message according to the notification output by the first judging module, and send the message to a Serving Call Session Control Function, S-CSCF.

Another network device is disclosed in an embodiment of the present invention. The network device is a Gateway GPRS Supporting Node (GGSN) and includes:
a second judging module, adapted to: judge whether the user access network type and the user location information of a calling user have changed according to the information received by the corresponding GGSN; and output a notification if determining that the user access network type and the user location information of the calling user have changed; and
a third sending module, adapted to report the changed user access network type and user location information of the calling user proactively according to the notification output by the second judging module to a Home Subscriber Server, HSS.

Evidently, the S-CSCF under the present invention obtains the user access network type and the user location information from the HSS, thus obtaining accurate and trustable user location information.

### BRIEF DESCRIPTION OF THE DRAWINGS

FIG. 1 is a first flowchart of a method for obtaining user location information in an embodiment of the present invention;
FIG. 2 is a second flowchart of a method for obtaining user location information in an embodiment of the present invention;
FIG. 3 shows an S-CSCF disclosed in an embodiment of the present invention;
FIG. 4 shows an HSS disclosed in an embodiment of the present invention; and
FIG. 5 shows a GGSN disclosed in an embodiment of the present invention.

### DETAILED DESCRIPTION

The S-CSCF under the present invention needs to obtain the user access network type and the user location information from an HSS. The HSS under the present invention may obtain the user access network type and the user location information from the

That is, the HSS obtains the user access network type and the user location information by receiving a message from the radio core network. The user access network type and the user location information stored in the radio core network correctly reflect the current user access network type and the current user location information. Therefore, the IMS domain network side (such as S-CSCF and HSS) in these embodiments of the present invention can obtain accurate and trustable user access network type and user location information. The radio core network here may be a second-generation (2G) or third-generation (3G) radio core network. The entity that sends messages on the radio core network side may be determined according to the actual network architecture. For example, the entity that sends messages may be a GGSN. These embodiments of the present invention do not restrict the form of the entity which sends the message carrying the user access network type and the user location information.

The user access network type and the user location information obtained herein are applicable in many aspects, for example, in the call service where the user dials a short number, and in a process of charging for the call service of the user. These embodiments of the present invention do not restrict the scenario of applying the obtained user access network type and user location information.

The following text describes the method for obtaining the user location information disclosed herein, namely, illustrates how an S-CSCF obtains the user access network type and the user location information from an HSS; how an HSS obtains the user access network type and the user location information from a GGSN; and how a GGSN obtains the user access network type and the user location information from a Serving GPRS Supporting Node (SGSN).

The S-CSCF receives a message carrying the user access network type and the user location information from the HSS. The message is a CxDx interface protocol message. Currently, the CxDx interface protocol message is unable to carry the user access network type or the user location information. Therefore, these embodiments of the present invention extend the CxDx interface protocol message to make this message carry the user access network type and the user location information.

The HSS may send the extended CxDx interface protocol message according to the request of the S-CSCF. For example, upon receiving a request message transmitted from the S-CSCF, the HSS sends the foregoing extended CxDx interface protocol message to the S-CSCF. In another example, after receiving a request message transmitted from the S-CSCF, the HSS sends the user access network type and the user location information to the S-CSCF periodically through the extended CxDx interface protocol message. Alternatively, after receiving a request message transmitted from the S-CSCF, the HSS adds the changed user access network type and user location information into the extended CxDx interface protocol message if determining that the user access network type and the user location information have changed, and sends the message to the S-CSCF. The foregoing mode of the HSS sending an extended CxDx interface protocol message as requested is called a passive sending mode. The foregoing request message carries request information that requests the user access network type and the user location information. The request message may be an extended CxDx interface protocol message, namely, the request message may be a CxDx interface protocol message extended in view of the request information.

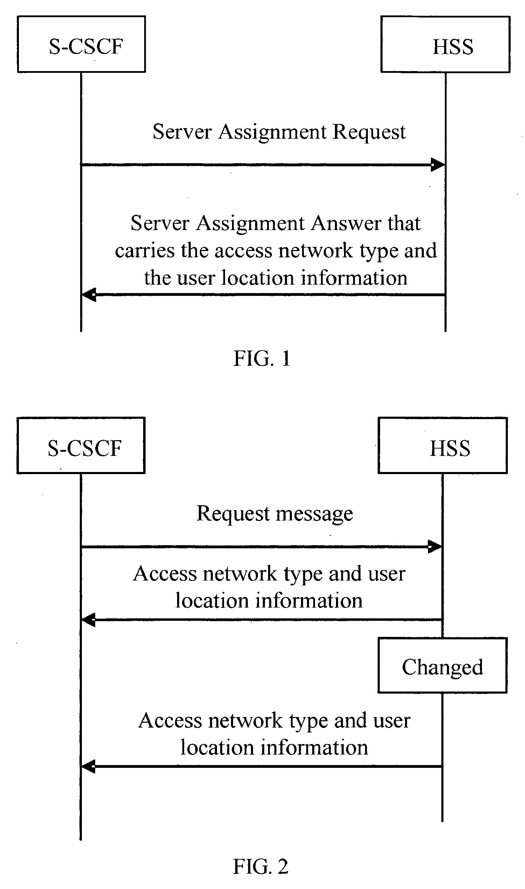

In the passive sending mode, the user location information may be obtained through a Server Assignment Request message and a Server Assignment Answer message in an embodiment of the present invention, as shown in FIG. 1.

In FIG. 1, the S-CSCF sends a Server Assignment Request message to the HSS. After receiving the Server Assignment Request message, the HSS adds the user access network type and the user location information into a Server Assignment Answer message, and sends the Server Assignment Answer message to the S-CSCF.

The detailed implementation process shown in FIG. 1 may be: In the IMS domain registration process of the user, the S-CSCF adds request information into a Server Assignment Request and sends the message to the HSS, where the request information requests the user access network type and the user location information. After receiving the Server Assignment Request message, the HSS adds the user access network type and the user location information into a Server Assignment Answer message according to the request information in the Server Assignment Request message, and sends the Server Assignment Answer message to the S-CSCF.

The detailed implementation process shown in FIG. 1 may also be: After the user originates an IMS call, the S-CSCF adds request information into an extended Server Assignment Request message and sends the message to the HSS, where the request information requests the user access network type and the user location information. After receiving the extended CxDx interface protocol message, the HSS adds the user access network type and the user location information into an extended Server Assignment Answer message according to the request information in the Server Assignment Request message, and sends the Server Assignment Answer message to the S-CSCF.

In the passive sending mode, the implementation process of obtaining the user location information may be shown in FIG. 2.

In FIG. 2, the S-CSCF sends a request message to the HSS. The request message carries the request information which requests the user access network type and the user location information. After receiving the request message, the HSS sends the user access network type and the user location information to the S-CSCF. The HSS may also send an indication of "reporting upon change of the user access network type and the user location information" to the S-CSCF. Therefore, the request information in the request message serves the function of subscription. After sending the user access network type and user location information to the S-CSCF, if determining that the user access network type or the user location information has changed, the HSS continues to send the user access network type and the user location information to the S-CSCF. In FIG. 2, the S-CSCF may obtain the user location information through a Server Assignment Request message, a Server Assignment Answer message, and a Push Profile Request (PPR) message. The HSS may send the indication of "reporting upon change of the user access network type and the user location information" together with the user access network type and the user location information to the S-CSCF. For example, the HSS adds the indication, the user access network type and the user location information into the Server Assignment Answer message, sends the message to the S-CSCF. Here the PPR message is also a CxDx interface protocol message extended in view of the user access network type and the user location information. The request information shown in FIG. 2 may serve the function of subscription. This embodiment does not restrict the form of the request information that carries the user access network type and the user location information, or the form of the CxDx interface protocol message that carries the user access network type and the user location information.

The HSS may send the extended CxDx interface protocol message to the S-CSCF proactively. For example, the HSS may send the user access network type and the user location information to the S-CSCF periodically through the extended CxDx interface protocol message. For another example, the HSS may add the changed user access network type and user location information into the extended CxDx interface protocol message if determining that the user access network type and the user location information have changed, and send the message to the S-CSCF. The HSS may make use of the extended PPR message when sending the user access network type and the user location information to the S-CSCF proactively.

In foregoing embodiments, the request information sent by the S-CSCF to the HSS may carry the indication of requesting the PS domain user location information preferentially or requesting the CS domain user location information preferentially. In this way, the HSS can determine whether to send the PS domain user location information or CS domain user location information to the S-CSCF according to the indication.

No matter whether the HSS sends the extended CxDx interface protocol message in the passive mode or the active mode, the HSS sends the CxDx interface protocol message that carries the user access network type and the user location information to the S-CSCF in two scenarios:
Scenario 1: When the HSS needs to send the CxDx interface protocol message that carries the user access network type and the user location information to the S-CSCF, the HSS adds the stored user access network type and user location information into the CxDx interface protocol message directly, and sends the CxDx interface protocol message to the S-CSCF.
   Scenario 1 is applicable when the GGSN in the radio core network and other devices such as SGSN support the reporting of the user access network type and the user location information. Because other devices such as SGSN support the reporting of the user access network type and the user location information, other devices such as SGSN can report the user access network type and the user location information to the GGSN upon change of the user access network type and the user location information. Because the GGSN supports the reporting of the user access network type and the user location information, the GGSN can report the user access network type and the user location information to the HSS upon change of the user access network type and the user location information. In this way, the accuracy of the user access network type and the user location information stored in the HSS as well as the accuracy of the user access network type and the user location information sent by the HSS to the S-CSCF are ensured.
   Scenario 1 is also applicable when only one SGSN is allowed to be in an administrative area.
Scenario 2: When the HSS needs to send the CxDx interface protocol message that carries the user access network type and the user location information to the S-CSCF, the HSS obtains the user access network type and the user location information from the GGSN, adds the obtained user access network type and user location information into the CxDx interface protocol message, and sends the CxDx interface protocol message to the S-CSCF. The HSS may also obtain the user access network type and the user location information from a Home Location Register (HLR).
   Scenario 2 is applicable when the GGSN or other devices such as SGSN do not support the reporting of the user access network type and the user location information.

The HSS needs, to distinguish between scenario 1 and scenario 2. According to the indication about support of reporting the change of the user location information received from the GGSN, the HSS determines whether the GGSN or other devices such as SGSN support the reporting of the user access network type and the user location information. That is, the HSS may determine whether to add the stored user access network type and user location information into the CxDx interface protocol message directly or obtain the user access network type and the user location information from the GGSN according to the indication about support of reporting the change of the user location information transmitted from the GGSN.

If other devices such as SGSN do not support the reporting of the user access network type and the user location information to the GGSN, the GGSN does not need to transmit the indication about support of reporting change of the user location information to the HSS. In this case, the HSS determines that the GGSN or other devices such as SGSN do not support the reporting of the user access network type and the user location information. If other devices such as SGSN support the reporting of the user access network type and the user location information to the GGSN but the GGSN itself does not support the reporting of the user access network type and the user location information to the HSS, the GGSN does not need to transmit the indication about support of reporting change of the user location information to the HSS. If other devices such as SGSN support the reporting of the user access network type and the user location information to the GGSN and the GGSN itself supports the reporting of the user access network type and the user location information to the HSS, the GGSN transmits the indication about support of reporting change of the user location information to the HSS.

The GGSN may add the indication about support of reporting the change of the user location information into an Accounting-Request message, and transmit the message to the HSS.

According to whether an indication about support of reporting the change of the user location information is received from the SGSN, the GGSN determines whether the SGSN supports the reporting of the user access network type and the user location information. The SGSN may add the indication about support of reporting the change of the user location information into an Accounting-Request message, and transmit the message to the GGSN.

The GGSN may report as instructed by the HSS when reporting the user access network type and the user location information to the HSS. That is, the HSS may instruct in what circumstances the GGSN needs to report the user access network type and the user location information. For example, the HSS may deliver an indication about change of the location level to the GGSN. After determining that the change level of the user access network type and/or user location information is consistent with the level indicated by the location level change indication delivered by the HSS, the GGSN reports the user access network type and the user location information to the HSS. After determining that the change level of the user access network type and/or user location information is inconsistent with the level indicated by the location level change indication delivered by the HSS, the GGSN does not report the user access network type or the user location information to the HSS. The location level here is set according to the network conditions. For example, the location level may be a cell level, a Service Area Identifier (SAI) level, or a Routing Area Identifier (RAI) level. These embodiments of the present invention do not restrict the specific form of the location level.

Because the network devices such as SGSN can perceive the user access network type and the user location information accurately, when the HSS needs to send the CxDx interface protocol message that carries the user access network type and the user location information to the S-CSCF, the HSS requests of the GGSN the user access network type and the user location information from the GGSN, and the GGSN requests of the SGSN the user access network type and user location information. Afterward, the SGSN sends the user access network type and the user location information to the GGSN, and the GGSN sends the user access network type and the user location information to the HSS, thus ensuring HSS to obtain accurate user access network type and user location information. In the case that the network devices such as the GGSN and the SGSN support the reporting of the user access network type and the user location information, the accuracy of the user access network type and the user location information stored by the HSS is also ensured. In this way, when the HSS needs to send the CxDx interface protocol message that carries the user access network type and the user location information to the S-CSCF, the HSS can send the stored user access network type and user location information to the S-CSCF directly. To sum up, these embodiments of the present invention ensure accuracy of the user access network type and the user location information sent by the HSS to the S-CSCF.

A specific implementation process of obtaining user location information includes the following steps:
Step 1: In the process of registering the UE onto the IMS domain, when the S-CSCF needs to download subscriber data from the HSS, the S-CSCF sends a Server Assignment Request message carrying request information to the HSS. The request information here requests the HSS to deliver the user access network type and the user location information to the S-CSCF. The request information indicates whether to request the CS domain user access network type and user location information preferentially, or request the PS domain user access network type and user location information preferentially.

In this embodiment, an information element (such as Requested-Domain) may be added into the Server Assignment Request message to carry the foregoing request information. The types of the Requested-Domain cell, namely, the enumerated values of the Requested-Domain element, may be in any of the following forms:
CS-Domain; and
PS-Domain.

The enumerated values of PS-Domain may be: UTRAN (3G), GERAN (2G), Wireless Local Area Network (WLAN), Generic Access Network (GAN), and other networks.

Step 2. After receiving the Server Assignment Request message, for fixed network users, the HSS delivers the subscribed subscriber location information to the S-CSCF through the existing CxDx interface; for mobile users, the HSS may handle in one of the following four modes:
Processing mode 1: If the HSS already obtains the user access network type and the user location information from the Radius interface of the GGSN, and if the SGSN and the GGSN support notification about change of the user location, the HSS adds the stored user access network type and user location information into the Server Assignment Answer message, and delivers the message to the S-CSCF. The notification about change of the user location refers to the reporting of the user access network type and the user location information.
   Four notes to processing mode 1:
   Note 1: The GGSN may determine whether the SGSN supports notification about change of user location according to whether the Create PDP Context Request message sent from the SGSN carries an "Info Change Reporting support ind" element. The "MS Info Change Reporting support ind" element is the indication about support of reporting the user location information. If the SGSN supports the notification about change of the user location, the SGSN may send the changed information to the GGSN through an MS Info Change Notification Request message after determining that the user access network type and the user location information have changed.
   Note 2: The HSS may determine whether the GGSN supports notification about change of user location according to whether the Accounting-Request message sent from the GGSN carries an "MS Location Change Reporting support ind" element. If the GGSN supports notification about change of the user location, the GGSN may send the changed information to the HSS through an Accounting-Request message or an Interim-Update message after determining that the user access network type and the user location information received from the SGSN have changed.
   Note 3: The HSS may notify the GGSN how to report the user access network type and the user location information. For example, the HSS adds a Location Requirement cell into an Accounting-Response message to indicate in which circumstances the GGSN needs to report the user access network type and the user location information.
      The Location Requirement element in the Accounting-Response message may carry "Cell/SAI change" or "RAI change". The "Cell/SAI change" indicates that the user access network type and the user location information need to be reported after the user location of the Cell/SAI level changes; and "RAI change" indicates that the user access network type and the user location information need to be reported after the user location of the RAI level changes. That is, the Location Requirement element indicates whether the HSS is notified upon change of the user location of the Cell/SAI level or upon change of the user location of the RAI level.
   Note 4: The 2G and the 3G may share the RAI and the Location Area Identifier (LAI). Therefore, when the user access network type changes from a UTRAN (3G) network to a GERAN (2G) network or vice versa, the GGSN does not need to report the user access network type or the user location information. However, when the user access network type changes to other types, the GGSN needs to report to the HSS unconditionally.
Processing mode 2: If the HSS already obtains the user access network type and the user location information from the Radius interface of the GGSN, and if the SGSN or the GGSN does not support notification about change of the user location (namely, does not support the reporting of the user access network type and the user location information), when the HSS needs to send a Server Assignment Answer message, the HSS may request of the GGSN the user access network type and the user location information first, and then adds the user access network type and the user location information transmitted from the GGSN into the Server Assignment Answer message, and delivers the message to the S-CSCF.
Processing mode 3: In the actual deployment of the network, if only one SGSN is allowed to be in an administrative area, because the cross-SGSN routing area update involves sending of an Update PDP Context Request message to the GGSN, the GGSN can perceive the change of the user area code in time. That is, the GGSN knows change of the user area code upon receiving the Update PDP Context Request message. After perceiving the change of the user area code, the GGSN needs to send an Accounting-Request message or Interim-Update message to the HSS. In this way, the HSS can know the current user location information in time. In this case, the HSS may add the stored user access network type and user location information into a Server Assignment Answer message directly, and send the Server Assignment Answer message to the S-CSCF.
Processing mode 4: In the actual deployment of the network, if it is impossible to let an SGSN be located in only one administrative area, the HSS needs to obtain the user access network type and the user location information from the CS domain or the PS domain as indicated by the Server Assignment Request. The HSS may send an Any Time Interrogation message to the HLR of the user according to the Mobile Subscriber ISDN Number (MSISDN) of the user, and then the HLR sends a Provide Subscriber Information message to the Mobile Switch Centre (MSC)/Visit Location Register (VLR) or the SGSN. In this way, the HSS may obtain the user access network type and the user location information from the message returned by the HLR, and add the user access network type and the user location information returned by the HLR into a Server Assignment Answer message, and send the Server Assignment Answer message to the S-CSCF.

The HSS may specify the precision of the user location information.

Generally, one LAI corresponds to only one administrative area, namely, only one area code, but the location update or routing area update of the UE in the CS domain or the PS domain is triggered by change of the LAI or RAI. Therefore, if the HSS indicates the need of location information, the MSC/VLR or SGSN does not need to determine the user access network type or the user location information by paging the user. The MSC/VLR or SGSN may obtain the current LAI and RAI of the user from the Location Update message, Routing Area Update (RAU) message, Service Request message, or Paging Response message.

In some circumstances, a LAI may cover several administrative regions, namely, have several area codes. In this case, if the HSS indicates the need of the Current Location, the MSC/VLR or SGSN needs to determine the current cell of the user by paging the user in order to accurately obtain the area code of the area where the user is located.

It is worthy of attention that the HSS may determine whether the delivered indication is location information or current location according to preconfigured information.
Step 3: The S-CSCF receives the Server Assignment Answer message from the HSS, and obtains the user access network type and the user location information from the message.
Step 4: The user originates a call from an IMS network, and the S-CSCF obtains the user access network type and the user location information. The user access network type and the user location information obtained by the S-CSCF may be applied to the routing of the IMS-originated call or charging for the call service.

In step 4, the S-CSCF may handle in two modes:
Processing mode 1: The S-CSCF use the stored user access network type and the user location information directly.

Processing mode 1 is applicable to this scenario: The S-CSCF receives an indication transmitted from the HSS. This indication indicates that: When the LAI or RAI of the user changes, the HSS may send a message proactively to update the user access network type and the user location information stored in the S-CSCF.

In this embodiment, the HSS may transmit the foregoing indication through a Server Assignment Answer message. For example, one of the following information elements is added into the Server Assignment Answer message:
Radio Access Type (RAT);
Location; or
Location-Change-Notification.

The types (namely, enumerated values) of the RAT include: UTRAN (3G), GERAN (2G), WLAN, GAN, and other networks. The format of Location may be obtained by reference to 3GPP TS 23.078. The Location-Change-Notification may have two enumerated values: Yes, and No. "Yes" indicates that the HSS updates the user access network type and the user location information stored in the S-CSCF proactively. In this case, the S-CSCF may obtain the user access network type and the user location information proactively only when the user registers onto the IMS domain. "No" indicates that the HSS does not update the user access network type or the user location information stored in the S-CSCF proactively. In this case, the S-CSCF needs to obtain the user access network type and the user location information whenever the user makes a call.

The HSS may update the user access network type and the user location information stored in the S-CSCF through a PPR message. That is, the PPR message of the CxDx interface protocol is extended in view of the user access network type and the user location information so that the PPR message carries the user access network type and the user location information. For example, a RAT type element and Location element is added into the PPR message.
Processing mode 2: The S-CSCF obtains the user access network type and the user location information from the HSS whenever the user makes a call.

Processing mode 2 is applicable to this scenario: The S-CSCF receives an indication transmitted from the HSS. This indication indicates that: When the LAI or RAI of the user changes, the HSS does not send a message proactively to update the user access network type and the user location information stored in the S-CSCF.

The method for transmitting user location information in this embodiment, namely, the method of the HSS transmitting user location information, is described below.

After determining that the user access network type and the user location information have changed, the HSS adds the user access network type and the user location information into a CxDx interface protocol message, and sends the message to the S-CSCF. Currently, the CxDx interface protocol message is unable to carry the user access network type or the user location information. Therefore, in this embodiment, the CxDx interface protocol message is extended to make this message carry the user access network type and the user location information.

The HSS may send the extended CxDx interface protocol message according to the request of the S-CSCF. The HSS may also send the extended CxDx interface protocol message to the S-CSCF proactively. For example, after receiving the Server Assignment Request message from the S-CSCF, the HSS adds the user access network type and the user location information into a Server Assignment Answer message, and sends the Server Assignment Answer message to the S-CSCF. For another example, after receiving the Server Assignment Request message from the S-CSCF, the HSS adds the user access network type and the user location information into a Server Assignment Answer message, and sends the Server Assignment Answer message to the S-CSCF; and, after determining that the user access network type or the user location information has changed, the HSS continues to send the user access network type and the user location information to the S-CSCF. In the process of continuing to send the user access network type and the user location information to the S-CSCF, the HSS may update the user access network type and the user location information stored in the S-CSCF through a PPR message. For example, a RAT type element or Location element is added into the PPR message.

According to the indication carried in the request information sent from the S-CSCF (the indication indicates whether to request the PS domain user location information preferentially or request the CS domain user location information preferentially), the HSS can determine whether to send the PS domain user location information or CS domain user location information to the S-CSCF.

In the scenario where the GGSN and other devices such as SGSN in a radio core network support the reporting of the user access network type and the user location information, and in the scenario where only one SGSN is allowed to be in an administrative area, when the HSS needs to send the CxDx interface protocol message that carries the user access network type and the user location information to the S-CSCF, the HSS may add the stored user access network type and user location information into the CxDx interface protocol message, and send the CxDx interface protocol message to the S-CSCF.

In the scenario where the GGSN or other devices such as SGSN in a radio core network does not support the reporting of the user access network type and the user location information, when the HSS needs to send the CxDx interface protocol message that carries the user access network type and the user location information to the S-CSCF, the HSS may obtain the user access network type and user location information from the GGSN first, and then add the obtained user access network type and user location information into the CxDx interface protocol message, and send the CxDx interface protocol message to the S-CSCF.

According to the indication about support of reporting the change of the user location information received from the GGSN, the HSS may determine whether the GGSN or other devices such as SGSN support the reporting of the user access network type and the user location information. For example, the HSS may judge whether the Accounting-Request message transmitted from the GGSN carries the indication about support of reporting change of the user location information. After determining that the Accounting-Request message carries an indication about support of reporting change of the user location information, the HSS determines that the GGSN and the SGSN support the reporting of the user access network type and the user location information; and, after determining that the Accounting-Request message carries no indication about support of reporting change of the user location information, the HSS determines that the GGSN or the SGSN does not support the reporting of the user access network type and the user location information. According to whether an indication about support of reporting the change of the user location information is received from the SGSN, the GGSN determines whether the SGSN supports the reporting of the user access network type and the user location information. The SGSN may add the indication about support of reporting the change of the user location information into an Accounting-Request message, and transmit the message to the GGSN.

The HSS may instruct in what circumstances the GGSN needs to report the user access network type and the user location information. For example, the HSS may deliver an indication about change of the location level to the GGSN. After determining the change level of the user access network type and/or user location information is consistent with the level indicated by the location level change indication delivered by the HSS, the GGSN reports the user access network type and the user location information to the HSS. After determining that the change level of the user access network type and/or user location information is inconsistent with the level indicated by the location level change indication delivered by the HSS, the GGSN does not report the user access network type or the user location information to the HSS. The location level here is set according to the network conditions. For example, the location level may be a cell level, an SAI level, or an RAI level.

The process of the HSS obtaining the user access network type and the user location information from the GGSN and the HLR, and the process of the HSS sending the user access network type and the user location information to the S-CSCF are the same as those described in the foregoing embodiment of the method for obtaining the user location information, and are not repeated here any further.

Because the network devices such as SGSN are capable of perceiving the user access network type and the user location information accurately, when the HSS needs to send the CxDx interface protocol message that carries the user access network type and the user location information to the S-CSCF, the HSS requests of the GGSN the user access network type and the user location information, thus ensuring the HSS to obtain accurate user access network type and user location information. In the case that the network devices such as the GGSN and the SGSN support the reporting of the user access network type and the user location information, the accuracy of the user access network type and the user location information stored by the HSS is also ensured. In this way, when the HSS needs to send the CxDx interface protocol message that carries the user access network type and the user location information to the S-CSCF, the HSS can send the stored user access network type and user location information to the S-CSCF directly. Therefore, this embodiment of the present invention ensures accuracy of the user access network type and the user location information sent by the HSS to the S-CSCF.

Another method for transmitting user location information in an embodiment of the present invention, namely, the method of the GGSN transmitting user location information, is described below.

In this embodiment, after determining that the user access network type and the user location information have changed, the GGSN reports the changed user access network type and user location information proactively. For example, the GGSN reports the changed user access network type and user location information to the HSS proactively.

The GGSN may report as indicated by the HSS when reporting the user access network type and the user location information to the HSS. That is, the HSS may indicate in what circumstances the GGSN needs to report the user access network type and the user location information. For example, after the GGSN receives an indication about change of the location level from the HSS, if determining that the change level of the user access network type and/or user location information is consistent with the level indicated by the location level change indication delivered by the HSS, the GGSN reports the user access network type and the user location information to the HSS. After determining that the change level of the user access network type and/or user location information is inconsistent with the level indicated by the location level change indication delivered by the HSS, the GGSN does not report the user access network type or the user location information to the HSS. The location level here is set according to the network conditions. For example, the location level may be a cell level, an SAI level, or an RAI level. These embodiments of the present invention do not restrict the specific form of the location level.

The GGSN may transmit the indication about support of reporting change of user location to the HSS. If the GGSN supports the reporting of the user access network type and the user location information to the HSS, and if the SGSN supports the reporting of the user access network type and the user location information to the GGSN, the GGSN may transmit the indication about support of reporting change of the user location information to the HSS. If the GGSN does not support the reporting of the user access network type and the user location information to the HSS, or if the SGSN does not support the reporting of the user access network type and the user location information to the GGSN, the GGSN does not transmit the indication about support of reporting change of the user location information to the HSS. The GGSN may add the indication about support of reporting the change of the user location information into an Accounting-Request message, and transmit the message to the HSS. According to whether an indication about support of reporting the change of the user location information is received from the SGSN, the GGSN determines whether the SGSN supports the reporting of the user access network type and the user location information. For example, according to whether the Accounting-Request message transmitted from the SGSN carries an indication about support of reporting change of the user location information, the GGSN determines whether the SGSN supports the reporting of the user access network type and the user location information. The process of the GGSN obtaining the user access network type and the user location information from the SGSN, and the process of the GGSN reporting the user access network type and the user location information to the HSS are the same as those described in the foregoing embodiment of the method for obtaining the user location information, and are not repeated here any further.

Because the network devices such as SGSN are capable of perceiving the user access network type and the user location information accurately. Therefore, the GGSN requests of the SGSN the user access network type and the user location information, thus ensuring the GGSN to obtain and report the user access network type and the user location information accurately. In the case that the network devices such as the SGSN support the reporting of the user access network type and the user location information, the accuracy of the user access network type and the user location information stored by the GGSN is also ensured. In this way, when the GGSN needs to send the user access network type and the user location information to the HSS, the GGSN can send the stored user access network type and user location information to the HSS directly. This embodiment ultimately ensures accuracy of the user access network type and the user location information sent by the GGSN to the HSS.

The service implementation method disclosed in an embodiment of the present invention is detailed below.

First, the S-CSCF receives the CxDx interface protocol message that is sent by the HSS and carries the user access network type and the user location information. This CxDx interface protocol message is extended in view of the user access network type and the user location information. If the HSS does not report the change to the S-CSCF when the user access network type or the user location information changes, the S-CSCF needs to request of the HSS the user access network type and the user location information in the service implementation process. If the HSS reports the change to the S-CSCF when the user access network type or the user location information changes, then in the service implementation process, the S-CSCF may directly use the user access network type and the user location information previously stored and received from the HSS. According to whether an indication of "reporting upon change of the user access network type and the user location information" is transmitted from the HSS, the S-CSCF determines whether it is necessary to request of the HSS the user access network type and the user location information. This indication is the Location-Change-Notification described in the foregoing embodiment. The process of the S-CSCF receiving the CxDx interface protocol message from the HSS is the same as that described in the foregoing embodiment of the method for obtaining the user location information, and is not repeated here any further.

The S-CSCF obtains the user access network type and the user location information from the CxDx interface protocol message transmitted from the HSS.

Afterward, the S-CSCF determines the area of the service initiator that uses a short number according to the obtained user access network type and user location information. The service here refers to a call service, a message service, and so on. Accordingly, the service initiator may be a calling party or a message sender. The S-CSCF may determine the area of the service initiator that uses a short number according to the prior art. The process of the S-CSCF determining the area of the service initiator that uses a short number according to the user access network type and the user location information is not elaborated herein.

Finally, the S-CSCF determines the area of the service peer according to the determined area of the service initiator, and performs subsequent service operations according to the area of the service peer. For example, the S-CSCF determines the area of the service call terminator, and continues the subsequent call processing; or determines the area of the message receiver and continues the subsequent message transmission. The process of the S-CSCF performing subsequent service operations according to the determined area of the service peer is based on the prior art, and is not elaborated here any further.

The S-CSCF obtains the user access network type and the user location information of the service initiator from the HSS, and the S-CSCF can obtain the user access network type and the user location information of the service peer according to the user access network type and the user location information of the service initiator. Therefore, the S-CSCF can continue the subsequent service operations, thus ensuring smooth implementation of the call service and the message service.

The service charging method disclosed in an embodiment of the present invention is detailed below.

First, the user access network type and the user location information are added as charging information into the charging bill of the IMS domain service. Afterward, in the charging for the IMS domain service of the user, the user access network type and the user location information in the charging bill may serve as charging parameters in the charging process. For example, the charging rate is determined in view of the user access network type and the user location information, and then the user is charged for the IMS domain service according to the determined charging rate.

The entity that adds the user access network type and the user location information as charging information into the charging bill of the IMS service depends on the network conditions. These embodiments of the present invention do not restrict the form of such an entity. When the entity is an S-CSCF, the process of the S-CSCF obtaining the user access network type and the user location information from the HSS, and the process of the S-CSCF obtaining the user access network type and the user location information from the HSS are the same as those described in the foregoing embodiment, and are not repeated here any further. The S-CSCF may add the user access network type and the user location information transmitted from the P-CSCF into the charging bill of the IMS domain service. The P-CSCF here may transmit the user access network type and the user location information obtained from the Connectivity Session Location and Repository Function (CLF) to the S-CSCF.

With the user access network type and the user location information being added into the charging bill of the user, with the user access network type and the user location information being used as charging parameters in the charging process, the charging mode is more flexible. Moreover, the user access network type and the user location information in the charging bill are obtained from the HSS or the CLF, thus ensuring authenticity of the user access network type and the user location information. Therefore, the call service that dials a short number or the message service that uses a short number can be implemented smoothly, and the charging for the call service is accurate.

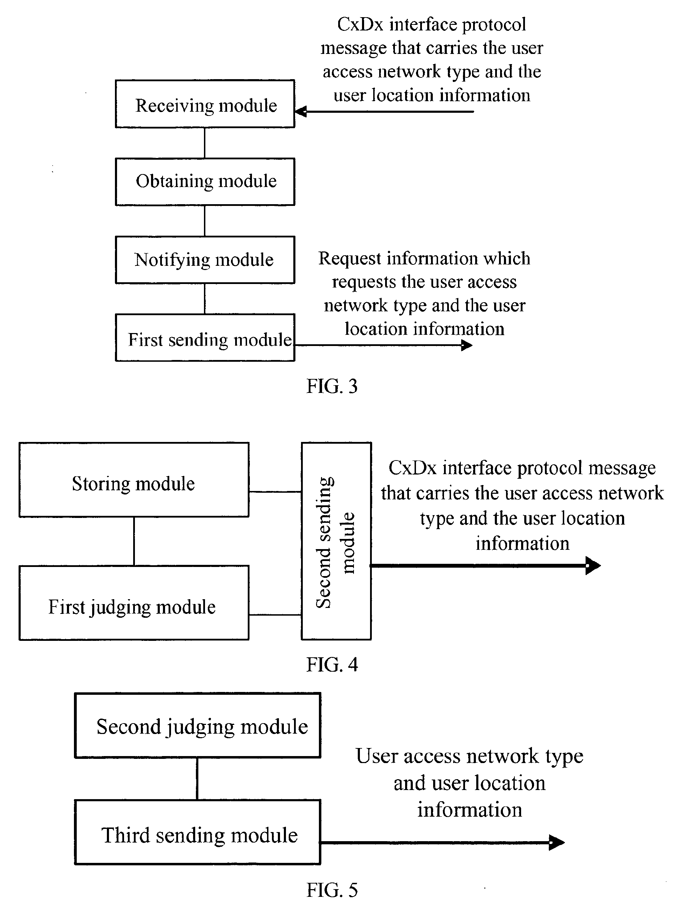

A network device is disclosed in an embodiment of the present invention. The network device is an S-CSCF. As shown in FIG. 3, the S-CSCF includes a receiving module and an obtaining module, and optionally, a first sending module and a notifying module.

The notifying module is adapted to: judge whether the corresponding S-CSCF receives an indication of "reporting upon change of the user access network type and the user location information" from the HSS; and allow the first sending module to send request information (for example, allow the first sending module to send a Server Assignment Request message carrying the request information) after determining that the corresponding S-CSCF receives no such indication and the first sending module needs to send the request information which requests the user access network type and the user location information. After determining that the corresponding S-CSCF receives the indication and needs to use the user access network type and the user location information, the notifying module notifies the obtaining module to obtain the user access network type and the user location information stored in the S-CSCF.

The first sending module is adapted to send the request information which requests the user access network type and the user location information to the HSS. The first sending module may add the request information which requests the user access network type and the user location information into a Server Assignment Request, and send the message to the HSS. The first sending module may send the Server Assignment Request carrying the request information to the HSS when the user registers onto the IMS domain, or the first sending module may send the Server Assignment Request carrying the request information to the HSS when the user originates a call from an IMS network. The first sending module may use another message to carry the request information. The request information may include an indication of requesting the PS domain user location information preferentially or requesting the CS domain user location information preferentially. The first sending module may send the Server Assignment Request that carries the request information as permitted by the notifying module. The process of the first sending module sending the request information is described in the foregoing method embodiment.

The receiving module is adapted to receive the CxDx interface protocol message that is sent by the HSS and inclusive of the user access network type and the user location information. Currently, the CxDx interface protocol message is unable to carry the user access network type or the user location information. Therefore, in this embodiment, the CxDx interface protocol message is extended to make this message carry the user access network type and the user location information. That is, the CxDx interface protocol message received by the receiving module is extended in view of the user access network type and the user location information. The CxDx interface protocol message that is received by the receiving module and inclusive of the user access network type and the user location information may be: a Server Assignment Answer message or a PPR message. The extending of the Server Assignment Answer message and the PPR message is described in the foregoing method embodiment.

The obtaining module is adapted to obtain the user access network type and the user location information from the CxDx interface protocol message received by the receiving module. The obtaining module may use the user access network type and the user location information carried in the PPR message to update the user access network type and the user location information stored in the S-CSCF. The obtaining module may store the obtained user access network type and user location information into the corresponding S-CSCF. The user access network type and the user location information obtained by the obtaining module may be applied to the subsequent operations performed by the corresponding S-CSCF for the call service and the message service of the user. The obtaining module may also add the obtained user access network type and user location information into the charging bill of the IMS domain service. Afterward, in the charging for the IMS domain service of the user, the user access network type and the user location information in the charging bill may serve as charging parameters in the charging process. When the S-CSCF that holds the obtaining module performs subsequent operations for the call service and the message service of the user, the obtaining module may obtain the user access network type and the user location information from the information stored in the corresponding S-CSCF according to the notification sent by the notifying module. The information stored in the S-CSCF here may be the user access network type and the user location information transmitted by the HSS through a PPR message.

Another network device is disclosed in an embodiment of the present invention. The network device is an HSS and includes: a storing module, a first judging module, and a second sending module.

The storing module is adapted to store the user access network type and the user location information.

The first judging module is adapted to: judge whether the user access network type and the user location information have changed; and use the changed user access network type and user location information to update the information stored in the storing module if determining that the user access network type and the user location information have changed, and output a notification.

After the HSS that holds the first judging module receives the indication about support of reporting the user location information transmitted from the GGSN in the radio core network, the first judging module determines that the GGSN and other devices such as SGSN support the reporting of the user access network type and the user location information. For example, according to whether the Accounting-Request message received by the HSS carries an indication about support of reporting change of the user location information, the first judging module determines whether the GGSN and other devices such as SGSN support the reporting of the user access network type and the user location information. When the corresponding HSS receives the user access network type and the user location information reported by the GGSN, the first judging module may use the user access network type and the user location information reported by the GGSN to update the information stored in the storing module.

After the corresponding HSS receives the request information from the S-CSCF, the first judging module may notify the second sending module to send the information in the storing module to the S-CSCF. For example, after the HSS receives the Server Assignment Request message from the S-CSCF, the first judging module notifies the second sending module to send the user access network type and the user location information stored in the storing module to the S-CSCF. For another example, in a scenario where the SGSN is located in only one administrative area, after the HSS receives the Server Assignment Request message from the S-CSCF, the first judging module notifies the second sending module to send the user access network type and the user location information stored in the storing module to the S-CSCF.

After the corresponding HSS receives the request information from the S-CSCF, the first judging module may also notify the second sending module to send the request information to the GGSN or HLR, where the request information requests the user access network type and the user location information.

According to the indication carried in the request information sent from the S-CSCF (the indication indicates whether to request the PS domain user location information preferentially or request the CS domain user location information preferentially), the first judging module can notify the second sending module to send the PS domain user location information or CS domain user location information to the S-CSCF.

The second sending module is adapted to send a CxDx interface protocol message to the S-CSCF. The CxDx interface protocol message is extended in view of the user access network type and the user location information. That is, the CxDx interface protocol message carries the user access network type and the user location information. The CxDx interface protocol message may also carry an indication of "reporting upon change of the user access network type and the user location information", for example, a Location-Change-Notification carried in a Server Assignment Answer message.

The second sending module may add the user access network type and user location information stored in the storing module into a CxDx interface protocol message directly according to the notification transmitted from the first judging module, and send the message to the S-CSCF. For example, the second sending module adds the user access network type and the user location information stored in the storing module into a Server Assignment Answer message, and sends the Server Assignment Answer message to the S-CSCF. For another example, the second sending module adds the user access network type and the user location information stored in the storing module into a PPR message, and sends the PPR message to the S-CSCF.

The second sending module may also send a request message to the GGSN or HLR according to the notification output by the first judging module, requesting the GGSN or HLR to transmit the user access network type and the user location information to the HSS. The request message sent by the second sending module may indicate in what circumstances the GGSN needs to report the user access network type and the user location information. For example, the second sending module may deliver an indication about change of the location level to the GGSN. After determining the change level of the user access network type and/or user location information is consistent with the level indicated by the location level change indication delivered by the HSS, the GGSN reports the user access network type and the user location information to the HSS. After determining that the change level of the user access network type and/or user location information is inconsistent with the level indicated by the location level change indication delivered by the HSS, the GGSN does not report the user access network type or the user location information to the HSS. The location level here is set according to the network conditions. For example, the location level may be a cell level, an SAI level, or an RAI level.

Another network device disclosed in an embodiment of the present invention is detailed below. The network device is a GGSN, which is shown in FIG. 5.

As shown in FIG. 5, the GGSN includes a second judging module and a third sending module.

The second judging module is adapted to: judge whether the user access network type and the user location information have changed according to the information received by the corresponding GGSN; and output a notification if determining that the user access network type and the user location information have changed.

According to whether the corresponding GGSN receives an indication about support of reporting the change of the user location information from the SGSN, the second judging module determines whether the SGSN supports the reporting of the user access network type and the user location information. For example, according to whether the Accounting-Request message transmitted from the SGSN carries an indication about support of reporting change of the user location information, the second judging module determines whether the SGSN supports the reporting of the user access network type and the user location information.

If determining that the SGSN supports the reporting of the user access network type and the user location information, the second judging module may notify the third sending module to send the user access network type and the user location information after the corresponding GGSN receives the user access network type and the user location information transmitted from the SGSN. If determining that the SGSN does not support the reporting of the user access network type and the user location information, the second judging module notifies the third sending module to send the request information which requests the user access network type and the user location information to the SGSN after the corresponding GGSN receives the user access network type and the user location information transmitted from the HSS.

The second judging module may notify the third sending module to report the user access network type and the user location information according to the indication delivered by the HSS. That is, the HSS may indicate in which circumstances the second judging module needs to notify the third sending module to report the user access network type and the user location information. For example, after the GGSN receives a location level change indication from the HSS, if the second judging module determines that the change level of the user access network type and/or the user location information is consistent with the level indicated by the location level change indication delivered by the HSS, the second judging module notifies the third sending module to report the user access network type and the user location information to the HSS. If determining that the change level of the user access network type and/or user location information is inconsistent with the level indicated by the location level change indication delivered by the HSS, the second judging module does not notify the third sending module. The location level here is set according to the network conditions. For example, the location level may be a cell level, an SAI level, or an RAI level. These embodiments of the present invention do not restrict the specific form of the location level.

If the corresponding GGSN supports the reporting of the user access network type and the user location information to the HSS, and if the SGSN supports the reporting of the user access network type and the user location information to the GGSN, the second judging module may notify the third sending module to transmit the indication about support of reporting change of the user location information to the HSS. If the corresponding GGSN does not support the reporting of the user access network type and the user location information to the HSS, or if the SGSN does not support the reporting of the user access network type and the user location information to the GGSN, the second judging module does not notify the third sending module to transmit the indication about support of reporting change of the user location information to the HSS.

The third sending module is adapted to report the user access network type and the user location information to the HSS proactively according to the notification output by the second judging module. The third sending module may send a request message to the SGSN according to the notification of the second judging module, where the request message requests the user access network type and the user location information. The third sending module may also transmit an indication about support of reporting change of user location information to the HSS according to the notification of the second judging module. The third sending module may add the indication about support of reporting the change of the user location information into an Accounting-Request message, and transmit the message to the HSS.

The foregoing embodiments reveal that: Because the network devices such as SGSN are capable of perceiving the user access network type and the user location information accurately, when the HSS needs to send the CxDx interface protocol message that carries the user access network type and the user location information to the S-CSCF, the HSS requests of the GGSN the user access network type and the user location information, and the GGSN requests of the SGSN the user access network type and the user location information. Afterward, the SGSN sends the user access network type and the user location information to the GGSN, and the GGSN sends the user access network type and the user location information to the HSS, thus ensuring HSS to obtain accurate user access network type and user location information. In the case that the network devices such as the GGSN and the SGSN support the reporting of the user access network type and the user location information, the accuracy of the user access network type and the user location information stored by the HSS is also ensured. In this way, when the HSS needs to send the CxDx interface protocol message that carries the user access network type and the user location information to the S-CSCF, the HSS can send the stored user access network type and user location information to the S-CSCF directly. This embodiment of the present invention ensures accuracy of the user access network type and the user location information sent by the HSS to the S-CSCF. The S-CSCF obtains the user access network type and the user location information of the service initiator from the HSS, and the S-CSCF can obtain the user access network type and the user location information of the service peer according to the user access network type and the user location information of the service initiator. Therefore, the S-CSCF can continue the subsequent service operations, thus ensuring smooth implementation of the call service and the message service. With the user access network type and the user location information being added into the charging bill of the user, with the user access network type and the user location information being used as charging parameters in the charging process, the charging mode is more flexible. Moreover, the user access network type and the user location information in the charging bill are obtained from the HSS, thus ensuring authenticity of the user access network type and the user location information. Therefore, accurate charging for the call service can performed under the present invention.

Although the invention has been described through several preferred embodiments, the invention is not limited to such embodiments. It is apparent that those skilled in the art can make modifications and variations without departing from the scope of the inventionas defined by the following claims.

## Claims

1. A method for obtaining user location information, comprising:
receiving, by a Serving Call Session Control Function, S-CSCF, a message sent proactively by a Home Subscriber Server, HSS, wherein the message carries a user access network type and user location information of a calling user;
and obtaining the user access network type and the user location information of the calling user from the message;
wherein the message is a CxDx interface protocol message, and the receiving the message sent by the HSS comprises:
receiving, by the S-CSCF, the CxDx interface protocol message sent by the HSS after the HSS determines that the user access network type and the user location information of the calling user have changed, wherein the CxDx interface protocol message carries the changed user access network type and the user location information.

2. The method of claim 1, wherein the sending, by the HSS, the message carrying the user access network type and the user location information comprises:
adding, by the HSS, the stored user access network type and user location information into the CxDx interface protocol message and sending the message to the S-CSCF if the HSS determines that a Serving GPRS Supporting Node, SGSN, and a Gateway GPRS Supporting Node, GGSN, support the reporting of the user access network type and the user location information; or
obtaining, by the HSS, the user access network type and the user location information from the GGSN or a Home Location Register, HLR, adding the obtained user access network type and user location information into the CxDx interface protocol message, and sending the message to the S-CSCF if the HSS determines that the SGSN or the GGSN does not support the reporting of the user access network type and the user location information.

3. The method of claim 2, wherein:
the HSS determines whether the SGSN or the GGSN supports the reporting of the user access network type and the user location information according to whether an indication about support of reporting change of the user location information is received from the GGSN.

4. The method of claim 3, wherein:
determining, by the GGSN, whether to send the indication about support of reporting change of the user location information to the HSS according to whether the GGSN supports the reporting of the user access network type and the user location information and/or according to whether the indication about support of reporting change of the user location information is received from the SGSN.

5. The method of claim 2, wherein the obtaining, by the HSS, the user access network type and the user location information from the GGSN or the HLR comprises:
receiving, by the HSS, an indication transmitted by the S-CSCF about whether to obtain the user location information from a Packet Switched, PS, domain preferentially or from a Circuit Switched, CS, domain preferentially, and obtaining the user access network type and the user location information from the GGSN or the HLR according to the indication.

6. The method of claim 2, further comprising:
sending, by the HSS, a location level change indication to the GGSN;
reporting, by the GGSN, the user access network type and the user location information to the HSS if the GGSN determines that a change level of the user access network type and/or the user location information is consistent with a level indicated by the location level change indication when the GGSN supports the reporting of the user access network type and the user location information.

7. The method of claim 2, wherein the obtaining, by the HSS, the user access network type and the user location information from the GGSN comprises:
requesting, by the GGSN, the user access network type and the user location information of the SGSN;
sending, by the SGSN, the user access network type and the user location information to the GGSN; and
sending, by the GGSN, the user access network type and the user location information to the HSS.

8. A network device, which is a Serving Call Session Control Function, S-CSCF, and comprises:
a receiving module, adapted to receive a message from a Home Subscriber Server, HSS, wherein the message carries a user access network type and user location information of a calling user and is extended in view of the user access network type and the user location information of the calling user, wherein the message is a CxDx interface protocol message, and the CxDx interface protocol message is sent proactively by the HSS after the HSS determines that the user access network type and the user location information of the calling user have changed and is inclusive of the changed user access network type and the user location information; and
an obtaining module, adapted to obtain the user access network type and the user location information of the calling user from the message received by the receiving module.

9. The network device of claim 8, further comprising:
a first sending module, adapted to add request information into a Server Assignment Request message in the process of registering a user onto an IP Multimedia Subsystem, IMS, domain or in the process of service implementation and send the message to the HSS, wherein the request information requests the user access network type and the user location information.

10. The network device of claim 9, further comprising a notifying module, adapted to:
judge whether a corresponding network device receives an indication of "reporting upon change of the user access network type and the user location information", and allow the first sending module to send the Server Assignment Request message that carries the request information after determining that the corresponding network device receives no such indication; and
notify the obtaining module to obtain the user access network type and the user location information from information stored in the network device after determining that the corresponding network device receives the indication and needs to use the user access network type and the user location information.

11. A network device, which is a Home Subscriber Server, HSS, and comprises:
a storing module, adapted to store a user access network type and user location information of a calling user;
a first judging module, adapted to judge whether the user access network type and the user location information of the calling user have changed according to information received by the HSS; and store the changed user access network type and user location information of the calling user into the storing module if determining that the user access network type and the user location information of the calling user have changed, and output a notification; and
a second sending module, adapted to add the changed user access network type and user location information of the calling user into a message according to the notification output by the first judging module, and send the message proactively to a Serving Call Session Control Function, S-CSCF.

12. A network device, which is a Gateway GPRS Supporting Node, GGSN, and comprises:
a second judging module, adapted to judge whether a user access network type and user location information of a calling user have changed according to information received by a corresponding GGSN; and output a notification if determining that the user access network type and the user location information of the calling user have changed; and
a third sending module, adapted to report the changed user access network type and user location information of the calling user proactively according to the notification output by the second judging module to a Home Subscriber Server, HSS.

## Patentansprüche

1. Verfahren zum Erzielen von Benutzerpositionsinformationen, Folgendes umfassend:
Empfangen einer Nachricht durch eine S-CSCF ("Serving Call Session Control Function"), die proaktiv von einem HSS ("Home Subscriber Server") gesendet wurde, wobei die Nachricht Informationen zu einer Art des Benutzerzugangsnetzwerkes und zur Benutzerposition eines rufenden Benutzers trägt,
und Erzielen der Informationen zur Art des Benutzerzugangsnetzwerkes und zur Benutzerposition des rufenden Benutzers aus der Nachricht,
wobei die Nachricht eine CxDx-Schnittstellenprotokollnachricht ist und das Empfangen der vom HSS gesendeten Nachricht Folgendes umfasst:
Empfangen der vom HSS gesendeten CxDx-Schnittstellenprotokollnachricht durch die S-CSCF, nachdem der HSS bestimmt, dass sich die Informationen zur Art des Benutzerzugangsnetzwerkes und zur Benutzerposition des rufenden Benutzers geändert haben, wobei die CxDx-Schnittstellenprotokollnachricht die geänderten Informationen zur Art des Benutzerzugangsnetzwerkes und zur Benutzerposition trägt.

2. Verfahren nach Anspruch 1, wobei das Senden der Nachricht, die die Informationen zur Art des Benutzerzugangsnetzwerkes und zur Benutzerposition trägt, durch den HSS Folgendes umfasst:
Einfügen der gespeicherten Informationen zur Art des Benutzerzugangsnetzwerkes und zur Benutzerposition in die CxDx-Schnittstellenprotokollnachricht durch den HSS und Senden der Nachricht an die S-CSCF, wenn der HSS bestimmt, dass ein SGSN ("Serving GPRS Supporting Node") und ein GGSN ("Gateway GPRS Supporting Node") das Melden der Informationen zur Art des Benutzerzugangsnetzwerkes und zur Benutzerposition unterstützen, oder
Erzielen der Informationen zur Art des Benutzerzugangsnetzwerkes und zur Benutzerposition vom GGSN oder einem HLR ("Home Location Register") durch den HSS, Einfügen der erzielten Informationen zur Art des Benutzerzugangsnetzwerkes und zur Benutzerposition in die CxDx-Schnittstellenprotokollnachricht und Senden der Nachricht an die S-CSCF, wenn der HSS bestimmt, dass der SGSN oder der GGSN das Melden der Informationen zur Art des Benutzerzugangsnetzwerkes und zur Benutzerposition nicht unterstützt.

3. Verfahren nach Anspruch 2, wobei:
der HSS auf der Grundlage dessen, ob vom GGSN eine Anzeige über das Unterstützen der Meldeänderung der Benutzerpositionsinformation empfangen wurde, bestimmt, ob der SGSN oder der GGSN das Melden der Informationen zur Art des Benutzerzugangsnetzwerkes und zur Benutzerposition unterstützt.

4. Verfahren nach Anspruch 3, wobei:
das Bestimmen durch den GGSN, ob die Anzeige über die Unterstützung der Meldeänderung der Benutzerpositionsinformation an den HSS zu senden ist, auf der Grundlage dessen, ob der GGSN das Melden der Informationen zur Art des Benutzerzugangsnetzwerkes und zur Benutzerposition unterstützt und/oder ob die Anzeige über die Unterstützung der Meldeänderung der Benutzerpositionsinformation vom SGSN empfangen wurde.

5. Verfahren nach Anspruch 2, wobei das Erzielen der Informationen zur Art des Benutzerzugangsnetzwerkes und zur Benutzerposition vom GGSN oder HLR durch den HSS Folgendes umfasst:
Empfangen einer vom S-CSCF gesendeten Anzeige darüber, ob die Benutzerpositionsinformation vorzugsweise von einer "PS-(Packed Switched)-Domain" oder vorzugsweise von einer "CS-(Circuit Switched)-Domain" erzielt werden soll, durch den HSS und Erzielen der Informationen zur Art des Benutzerzugangsnetzwerkes und zur Benutzerposition vom GGSN oder HLR gemäß der Anzeige.

6. Verfahren nach Anspruch 2, ferner Folgendes umfassend:
Senden einer Positionsebenen-Änderungsanzeige an den GGSN durch den HSS,
Melden der Informationen zur Art des Benutzerzugangsnetzwerkes und zur Benutzerposition an den HSS durch den GGSN, wenn der GGSN bestimmt, dass eine Änderungsebene der Informationen zur Art des Benutzerzugangsnetzwerkes und/oder zur Benutzerposition mit einer Ebene übereinstimmt, die durch die Positionsebenen-Änderungsanzeige angezeigt wird, wenn der GGSN das Melden der Informationen zur Art des Benutzerzugangsnetzwerkes und zur Benutzerposition unterstützt.

7. Verfahren nach Anspruch 2, wobei das Erzielen der Informationen zur Art des Benutzerzugangsnetzwerkes und zur Benutzerposition vom GGSN durch den HSS Folgendes umfasst:
Abfragen der Informationen zur Art des Benutzerzugangsnetzwerkes und zur Benutzerposition vom SGSN durch den GGSN,
Senden der Informationen zur Art des Benutzerzugangsnetzwerkes und zur Benutzerposition vom SGSN an den GGSN und
Senden der Informationen zur Art des Benutzerzugangsnetzwerkes und zur Benutzerposition vom GGSN an den HSS.

8. Netzwerkvorrichtung, die eine S-CSCF ("Serving Call Session Control Function") ist und Folgendes umfasst:
ein Empfangsmodul, das dafür eingerichtet ist, eine Nachricht von einem HSS ("Home Subscriber Server") zu empfangen, wobei die Nachricht Informationen zu einer Art des Benutzerzugangsnetzwerkes und zur Benutzerposition eines rufenden Benutzers trägt und in Hinsicht auf Informationen zur Art des Benutzerzugangsnetzwerkes und zur Benutzerposition des rufenden Benutzers erweitert ist, wobei die Nachricht eine CxDx-Schnittstellenprotokollnachricht ist und die CxDx-Schnittstellenprotokollnachricht durch den HSS proaktiv gesendet wird, nachdem der HSS bestimmt hat, dass sich die Informationen zur Art des Benutzerzugangsnetzwerkes und zur Benutzerposition des rufenden Benutzers geändert haben und die geänderten Informationen zur Art des Benutzerzugangsnetzwerkes und zur Benutzerposition enthalten, und
ein Erzielungsmodul, das dafür eingerichtet ist, die Informationen zur Art des Benutzerzugangsnetzwerkes und zur Benutzerposition des rufenden Benutzers aus der Nachricht zu erzielen, die vom Empfangsmodul empfangen wurde.

9. Netzwerkvorrichtung nach Anspruch 8, ferner Folgendes umfassend:
ein erstes Sendemodul, das dafür eingerichtet ist, in eine Serverzuordnungs-Abfragenachricht im Prozess der Registrierung eines Benutzers in einer Domain eines IMS ("IP Multimedia Subsystem") oder im Prozess der Diensterfüllung eine Abfrageinformation einzufügen und die Nachricht an den HSS zu senden, wobei die Abfrageinformation die Informationen zur Art des Benutzerzugangsnetzwerkes und zur Benutzerposition abfragt.

10. Netzwerkvorrichtung nach Anspruch 9, ferner ein Benachrichtigungsmodul umfassend, das für Folgendes eingerichtet ist:
Beurteilen, ob eine entsprechende Netzwerkvorrichtung eine Anzeige einer "Meldung über eine Veränderung der Informationen zur Art des Benutzerzugangsnetzwerkes und zur Benutzerposition" empfängt, und Ermöglichen des Sendens der Serverzuordnungs-Abfragenachricht, welche die Abfrageinformation trägt, durch das erste Sendemodul, nach dem Bestimmen, dass die entsprechende Netzwerkvorrichtung keine derartige Anzeige empfängt, und
Benachrichtigen des Erzielungsmoduls, die Informationen zur Art des Benutzerzugangsnetzwerkes und zur Benutzerposition aus Informationen zu erzielen, die in der Netzwerkvorrichtung gespeichert sind, nach dem Bestimmen, dass die entsprechende Netzwerkvorrichtung die Anzeige empfängt und die Informationen zur Art des Benutzerzugangsnetzwerkes und zur Benutzerposition verwenden muss.

11. Netzwerkvorrichtung, die ein HSS ("Home Subscriber Server") ist und Folgendes umfasst:
ein Speichermodul, das dafür eingerichtet ist, Informationen zur Art des Benutzerzugangsnetzwerkes und zur Benutzerposition eines rufenden Benutzers zu speichern,
ein erstes Beurteilungsmodul, das dafür eingerichtet ist, gemäß Informationen, die durch den HSS empfangen werden, zu beurteilen, ob sich die Informationen zur Art des Benutzerzugangsnetzwerkes und zur Benutzerposition des rufenden Benutzers geändert haben, und die geänderten Informationen zur Art des Benutzerzugangsnetzwerkes und zur Benutzerposition des rufenden Benutzers in das Speichermodul zu speichern, wenn bestimmt wird, dass sich die Informationen zur Art des Benutzerzugangsnetzwerkes und zur Benutzerposition des rufenden Benutzers geändert haben, und eine Benachrichtigung auszugeben, und
ein zweites Sendemodul, das dafür eingerichtet ist, gemäß der Benachrichtigungsausgabe durch das erste Beurteilungsmodul die geänderten Informationen zur Art des Benutzerzugangsnetzwerkes und zur Benutzerposition des rufenden Benutzers in eine Nachricht einzufügen und die Nachricht proaktiv an eine S-CSCF ("Serving Call Session Control Function") zu senden.

12. Netzwerkvorrichtung, die ein GGSN ("Gateway GPRS Supporting Node") ist und Folgendes umfasst:
ein zweites Beurteilungsmodul, das dafür eingerichtet ist, gemäß Informationen, die durch einen entsprechenden GGSN empfangen werden, zu beurteilen, ob sich Informationen zur Art des Benutzerzugangsnetzwerkes und zur Benutzerposition eines rufenden Benutzers geändert haben, und eine Benachrichtigung auszugeben, wenn bestimmt wird, dass sich die Informationen zur Art des Benutzerzugangsnetzwerkes und zur Benutzerposition des rufenden Benutzers geändert haben, und
ein drittes Sendemodul, das dafür eingerichtet ist, die geänderten Informationen zur Art des Benutzerzugangsnetzwerkes und zur Benutzerposition des rufenden Benutzers gemäß der Benachrichtigungsausgabe durch das zweite Beurteilungsmodul proaktiv an einen HSS ("Home Subscriber Server") zu melden.

## Revendications

1. Procédé pour l'obtention d'informations de position d'utilisateur, comprenant :
la réception, par une Fonction de Contrôle de Session d'Appel de Desserte, S-CSCF (Serving Call Session Control Function), d'un message envoyé de manière proactive par un Serveur d'Abonné Résidentiel, HSS (Home Subscriber Server), dans lequel le message transporte un type de réseau d'accès d'utilisateur et des informations de position d'utilisateur d'un utilisateur appelant ;
et l'obtention du type de réseau d'accès d'utilisateur et des informations de position d'utilisateur de l'utilisateur appelant à partir du message ;
dans lequel le message est un message de protocole d'interface CxDx, et la réception du message envoyé par le HSS comprend :
la réception, par la S-CSCF, du message de protocole d'interface CxDx envoyé par le HSS après que le HSS a déterminé que le type de réseau d'accès d'utilisateur et que les informations de position d'utilisateur de l'utilisateur appelant ont changé, dans lequel le message de protocole d'interface CxDx transporte le type de réseau d'accès d'utilisateur ayant changé et les informations de position d'utilisateur.

2. Procédé selon la revendication 1, dans lequel l'envoi, par le HSS, du message transportant le type de réseau d'accès d'utilisateur et les informations de position d'utilisateur comprend :
l'ajout, par le HSS, du type de réseau d'accès d'utilisateur stocké et des informations de position d'utilisateur dans le message de protocole d'interface CxDx et l'envoi du message à la S-CSCF si le HSS détermine qu'un Noeud de Support GPRS de Desserte, SGSN (Serving GPRS Supporting Node), et qu'un Noeud de Support GPRS Passerelle, GGSN (Gateway GPRS Supporting Node), prennent en charge le signalement du type de réseau d'accès d'utilisateur et des informations de position d'utilisateur ; ou
l'obtention, par le HSS, du type de réseau d'accès d'utilisateur et des informations de position d'utilisateur à partir du GGSN ou d'un Registre de Localisation Nominale, HLR (Home Location Register), l'ajout du type de réseau d'accès d'utilisateur et des informations de position d'utilisateur obtenus dans le message de protocole d'interface CxDx, et l'envoi du message à la S-CSCF si le HSS détermine que le SGSN ou le GGSN ne prend pas en charge le signalement du type de réseau d'accès d'utilisateur et des informations de position d'utilisateur.

3. Procédé selon la revendication 2, dans lequel :
le HSS détermine si le SGSN ou le GGSN prend en charge le signalement du type de réseau d'accès d'utilisateur et des informations de position d'utilisateur selon qu'une indication concernant la prise en charge du signalement d'un changement des informations de position d'utilisateur est ou non reçue du GGSN.

4. Procédé selon la revendication 3, dans lequel :
la détermination, par le GGSN, de l'envoi ou non de l'indication concernant la prise en charge du signalement d'un changement des informations de position d'utilisateur au HSS selon que le GGSN prend ou non en charge le signalement du type de réseau d'accès d'utilisateur et des informations de position d'utilisateur et/ou selon que l'indication concernant la prise en charge du signalement d'un changement des informations de position d'utilisateur est ou non reçue du SGSN.

5. Procédé selon la revendication 2, dans lequel l'obtention, par le HSS, du type de réseau d'accès d'utilisateur et des informations de position d'utilisateur à partir du GGSN ou du HLR comprend :
la réception, par le HSS, d'une indication transmise par la S-CSCF concernant l'obtention ou non des informations de position d'utilisateur préférentiellement à partir d'un domaine à Commutation de Paquets, PS (Packet Switched), ou préférentiellement à partir d'un domaine à Commutation de Circuits, CS (Circuit Switched), et l'obtention du type de réseau d'accès d'utilisateur et des informations de position d'utilisateur à partir du GGSN ou du HLR conformément à l'indication.

6. Procédé selon la revendication 2, comprenant en outre :
l'envoi, par le HSS, d'une indication de changement de niveau de position au GGSN ;
le signalement, par le GGSN, du type de réseau d'accès d'utilisateur et des informations de position d'utilisateur au HSS si le GGSN détermine qu'un niveau de changement du type de réseau d'accès d'utilisateur et/ou des informations de position d'utilisateur est en cohérence avec un niveau indiqué par l'indication de changement de niveau de position lorsque le GGSN prend en charge le signalement du type de réseau d'accès d'utilisateur et des informations de position d'utilisateur.

7. Procédé selon la revendication 2, dans lequel l'obtention, par le HSS, du type de réseau d'accès d'utilisateur et des informations de position d'utilisateur à partir du GGSN comprend :
la demande, par le GGSN, du type de réseau d'accès d'utilisateur et des informations de position d'utilisateur du SGSN ;
l'envoi, par le SGSN, du type de réseau d'accès d'utilisateur et des informations de position d'utilisateur au GGSN ; et
l'envoi, par le GGSN, du type de réseau d'accès d'utilisateur et des informations de position d'utilisateur au HSS.

8. Dispositif de réseau, qui est une Fonction de Contrôle de Session d'Appel de Desserte, S-CSCF, et comprend :
un module de réception, apte à recevoir un message en provenance d'un Serveur d'Abonné Résidentiel, HSS, dans lequel le message transporte un type de réseau d'accès d'utilisateur et des informations de position d'utilisateur d'un utilisateur appelant et est étendu pour tenir compte du type de réseau d'accès d'utilisateur et des informations de position d'utilisateur de l'utilisateur appelant, dans lequel le message est un message de protocole d'interface CxDx, et le message de protocole d'interface CxDx est envoyé de manière proactive par le HSS après que le HSS a déterminé que le type de réseau d'accès d'utilisateur et les informations de position d'utilisateur de l'utilisateur appelant ont changé et contient le type de réseau d'accès d'utilisateur et les informations de position d'utilisateur ayant changé ; et
un module d'obtention, apte à obtenir le type de réseau d'accès d'utilisateur et les informations de position d'utilisateur de l'utilisateur appelant à partir du message reçu par le module de réception.

9. Dispositif de réseau selon la revendication 8, comprenant en outre :
un premier module d'envoi, apte à ajouter des informations de demande dans un message de Demande d'Affectation de Serveur lors du processus d'enregistrement d'un utilisateur sur un domaine de Sous-système Multimédia IP, IMS (IP Multimedia Subsystem), ou lors du processus de mise en oeuvre de service et envoyer le message au HSS, dans lequel les informations de demande demandent le type de réseau d'accès d'utilisateur et les informations de position d'utilisateur.

10. Dispositif de réseau selon la revendication 9, comprenant en outre un module de notification, apte à :
juger si un dispositif de réseau correspondant reçoit une indication du « signalement lors d'un changement du type de réseau d'accès d'utilisateur et des informations de position d'utilisateur », et permettre au premier module d'envoi d'envoyer le message de Demande d'Affectation de Serveur qui transporte les informations de demande après avoir déterminé que le dispositif de réseau correspondant ne reçoit pas une telle indication ; et
notifier au module d'obtention d'obtenir le type de réseau d'accès d'utilisateur et les informations de position d'utilisateur à partir d'informations stockées dans le dispositif de réseau après avoir déterminé que le dispositif de réseau correspondant reçoit l'indication et qu'il est nécessaire qu'il utilise le type de réseau d'accès d'utilisateur et les informations de position d'utilisateur.

11. Dispositif de réseau, qui est un Serveur d'Abonné Résidentiel, HSS, et comprend :
un module de stockage, apte à stocker un type de réseau d'accès d'utilisateur et des informations de position d'utilisateur d'un utilisateur appelant ;
un premier module de jugement, apte à juger si le type de réseau d'accès d'utilisateur et les informations de position d'utilisateur de l'utilisateur appelant ont changé conformément à des informations reçues par le HSS ; et stocker le type de réseau d'accès d'utilisateur et les informations de position d'utilisateur de l'utilisateur appelant ayant changé dans le module de stockage s'il est déterminé que le type de réseau d'accès d'utilisateur et les informations de position d'utilisateur de l'utilisateur appelant ont changé, et délivrer en sortie une notification ; et
un deuxième module d'envoi, apte à ajouter le type de réseau d'accès d'utilisateur et les informations de position d'utilisateur de l'utilisateur appelant ayant changé dans un message conformément à la notification délivrée en sortie par le premier module de jugement, et envoyer le message de manière proactive à une Fonction de Contrôle de Session d'Appel de Desserte, S-CSCF.

12. Dispositif de réseau, qui est un Noeud de Support GPRS Passerelle, GGSN, et comprend :
un deuxième module de jugement, apte à juger si un type de réseau d'accès d'utilisateur et des informations de position d'utilisateur d'un utilisateur appelant ont changé conformément à des informations reçues par un GGSN correspondant ; et délivrer en sortie une notification s'il est déterminé que le type de réseau d'accès d'utilisateur et les informations de position d'utilisateur de l'utilisateur appelant ont changé ; et
un troisième module d'envoi, apte à signaler le type de réseau d'accès d'utilisateur et les informations de position d'utilisateur de l'utilisateur appelant ayant changé de manière proactive conformément à la notification délivrée en sortie par le deuxième module de jugement à un Serveur d'Abonné Résidentiel, HSS.
